# EUROPÄISCHE PATENTSCHRIFT

(11) **EP 1 383 398 B1**
(45) Veröffentlichungstag und Bekanntmachung des Hinweises auf die Patenterteilung: **27.06.2007**
(21) Anmeldenummer: 01960579.9
(22) Anmeldetag: 27.07.2001
(51) Int. Cl.: A23L 1/29

(54) **DIÄTETISCHES LEBENSMITTEL ZUM FETTABBAU**
DIETIC FOOD FOR FAT-REDUCTION
ALIMENT DIETETIQUE DESTINE A REDUIRE LES GRAISSES

(30) Priorität: 27.07.2000 DE 20012857 U
(43) Veröffentlichungstag der Anmeldung: 28.01.2004
(73) Patentinhaber: Sportmedizin Team Vertriebs GmbH, 9442 Berneck (CH)
(72) Erfinder: APFELBAUM, Udo, CH-9442 Berneck (CH)
(74) Vertreter: Pfortner, Peter
(86) Internationale Anmeldenummer: PCT/EP2001/008731
(87) Internationale Veröffentlichungsnummer: WO 2002/009534

(56) Entgegenhaltungen:
- EP-A- 1 023 843
- GB-A- 2 169 485
- US-A- 5 626 849
- US-A- 5 895 652
- US-A1- 2001 041 187

## Beschreibung

Die Erfindung bezieht sich auf ein diätetisches Lebensmittel zur Verwendung bei gestörtem Fettstoffwechsel für Personen mit besonderen physiologischen Umständen wie z. B. Fettleibigkeit.

Es sind zahlreiche derartige Lebensmittel bekannt, die durch Ballaststoffe, reine Eiweißzufuhr, Verdauungsbeschleunigung usw. den Zweck zu erreichen suchen. Im menschlichen Organismus erfolgt der Fettabbau, nach mehreren Zwischenschritten, letztendlich nach den gleichen Grundsätzen wie der Kohlehydratabbau. Eine reduzierte Fettaufnahme hat somit eine erhöhte Insulinausschüttung zur Folge. Dadurch werden die körpereigenen Kohlehydratspeicher entleert und ein verstärktes Hungergefühl tritt auf. Für die Spaltung von Fetten und für das Hungergefühl spielen Lipasen eine Rolle, wobei speziell Lipoprotein-Lipasen von Bedeutung sind, die am Endothel der Gefäße sitzen. Von dort wird das Signal abgegeben, daß Energie fehlt, und wird der Hunger ausgelöst. Das Resultat kann dann sein, daß der betreffende Interessent in Versuchung gerät, den Hunger durch Mehrverzehr zu überwinden.

Demgegenüber soll durch die Erfindung während der Diätzeit das Hungergefühl gezügelt werden. Dies wird dadurch erreicht, daß das diätetische Mittel gemäß der Erfindung MCT enthält. Die unter der Bezeichnung MCT ("medium-chain triglycerides") bekannte Verbindungsklasse umfaßt Triglyceride von Fettsäuren mittlerer Kettenlänge, wobei unter Fettsäuren mittlerer Kettenlänge insbesondere C₈-C₁₂-Fettsäuren verstanden werden. MCT ist an sich bekannt, z. B. als Delios V und Delios C. Es hat eine ölartige Konsistenz. Neu ist die Anwendung dieser Substanz als diätetisches Lebensmittel zur Fettstoffwechselregulierung, ergänzt durch L-Carnitin, speziell in der Form L-Carnitin-tartrat, das als Transportprotein dient, um langkettige Fette aus den Körperspeichern in die Mitochondrien zur Verbrennung zu bringen, wodurch L-Carnitin für einen schnelleren Fettabbau mithelfen kann, und Coenzym Q10, das lipophil ist und an den Reaktionen der Fettsäuren im Bereich der energieliefernden Zellreaktionen beteiligt ist. In dieser Eigenschaft kann es während einer vermehrten Fettverbrennung diese noch beschleunigen.

US-5626849 offenbart eine Zusammensetzung zur Gewichts reduktion, die L-carnitin, nach fach ungesättigte Fettsämren, Kränter und CoEnzym Q10 enthalten.

MCT wird ungespalten durch die Darmwand resorbiert und ist Kohle-hydraten durch seinen doppelten Brennwert für die Energieversorgung des Körpers überlegen. Außerdem steht die Energie unter Umgehung der "Insulin-Pumpe" zur Verfügung, so daß praktisch kein "Hungerast" auftritt. Im Sinne der Gewichtsverminderung wirkt MCT so, daß der Interessent aufgrund einer Stoffwechselumstellung abnimmt. Wenn er beispielsweise eine Hauptmahlzeit ausfallen läßt und sich reichlich bewegt, wird er durch das MCT unter Beachtung der Vorschriften in den Fettstoffwechsel - im Gegensatz zum Kohlehydratestoffwechsel - gezwungen und baut damit Kalorien ab. MCT scheint die Lipoprotein-Lipase zu blockieren oder zu belegen, wodurch das Hungergefühl gedämpft wird. Es wurde festgestellt, daß man mit Hilfe des erfindungsgemäßen diätetischen Lebensmittels bis zu sechs Stunden keinen Hunger hat. Während normalerweise der Fettstoffwechsel nur durch lange körperliche Arbeit in Gang kommt, bringt MCT in Verbindung mit L-Carnitin und Coenzym Q10 den Fettstoffwechsel sehr schnell in Gang, z. B. in 10 Minuten. Durch ein wenig MCT in Verbindung mit den anderen Zusatzstoffen wird der sehr große Vorrat der körpereigenen Fette angegriffen und mobilisiert.

Zur Unterstützung des Verbrennungsprozesses wird zweckmäßigerweise Molybdän als Salz, insbesondere in der Darreichungsform von Molybdänhefe, zugesetzt. Dies hilft vor allem bei Meteorismen und Fettverdauung und baut über das molybdänhaltige Enzym Xantinoxidase die Harnsäure auf, die als wichtiger Fänger von freien Radikalen wirkt, welche beim Prozeß des Abnehmens leicht entstehen können. Außerdem wird zweckmäßigerweise in kleiner Menge Mangan zugesetzt, das ein Mangelspurenelement ist und den Fett-Metabolismus unterstützt.

Schließlich erweist es sich, daß die Verträglichkeit noch verbessert wird, wenn eine kleine Menge Kohlehydrate, und zwar speziell Maltodextrin, im erfindungsgemäßen Lebensmittel enthalten ist.

Sachgerechte Mengenangaben sind in den Unterangaben enthalten. Mit passenden Geschmacksstoffen und Füllstoffen läßt sich das Lebensmittel in eine vom Interessenten akzeptierte Formation bringen. Es hat dann den Zustand eines Gels oder einer Paste.

Eine vorteilhafte Ergänzung stellt es dar, wenn dem diätetischen Lebensmittel zusätzlich Omega3-Fettsäuren zugesetzt sind.

## Patentansprüche

1. Diätetisches Lebensmittel zum Fettabbau, enthaltend als überwiegenden Bestandteil MCT und als weitere Bestandteile L-Carnitin und Coenzym Q10.

2. Lebensmittel nach Anspruch 1, zusätzlich enthaltend Molybdän und Mangan in Form von Salzen.

3. Lebensmittel nach Anspruch 2, **dadurch gekennzeichnet, daß** das Molybdänsalz in Form von Molybdänhefe enthalten ist.

4. Lebensmittel nach Anspruch 2 oder 3, **dadurch gekennzeichnet, daß** das Mangansalz Mangan(II)carbonat ist.

5. Lebensmittel nach Anspruch 3 oder 4, **dadurch gekennzeichnet, daß** es 0,15 bis 2 Gew.-% g Molybdänhefe mit ca. 2.000 mcg Mo/g und 0,01 bis 0,03 Gew.-% Mangan(II)carbonat-Hydrat enthält.

6. Lebensmittel nach einem der Ansprüche 1 bis 5, **dadurch gekennzeichnet, daß** das MCT in einem Anteil von 70 bis 80 Gew.-% enthalten ist, bezogen auf das Gesamtgewicht der Zusammensetzung.

7. Lebensmittel nach einem der Ansprüche 1 bis 6, enthaltend einen kleinen Anteil Kohlehydrate.

8. Lebensmittel nach Anspruch 7, **dadurch gekennzeichnet, daß** die Kohlehydrate in einem Anteil von 5 bis 8 Gew.-%, bezogen auf das Gesamtgewicht der Zusammensetzung, bevorzugt in Form von Maltodextrin, enthalten sind.

9. Lebensmittel nach einem der Ansprüche 1 bis 8, **dadurch gekennzeichnet, daß** das L-Carnitin als L-Carnitin-tartrat vorliegt, das in einem Anteil von 2 bis 3 Gew.-% enthalten ist, und das Coenzym Q10 in einem Anteil von 0,08 bis 1 Gew.-% enthalten ist.

10. Lebensmittel nach einem der Ansprüche 1 bis 9, zusätzlich enthaltend Omega3-Fettsäuren.

## Claims

1. A dietary foodstuff for degradation of fat, containing MCT as the predominant ingredient and L-carnitine and coenzyme Q10 as additional ingredients.

2. The foodstuff according to Claim 1,
additionally containing molybdenum and manganese in the form of salts.

3. The foodstuff according to Claim 2,
**characterized in that** the molybdenum salt is present in the form of molybdenum yeast.

4. The foodstuff according to Claim 2 or 3,
**characterized in that** the manganese salt is manganese(II) carbonate.

5. The foodstuff according to Claim 3 or 4,
**characterized in that** it contains 0.15 to 2 wt% molybdenum yeast with approximately 2,000 mcg Mo/g and 0.01 to 0.03% by weight manganese(II) carbonate hydrate.

6. The foodstuff according to any one of Claims 1 through 5,
**characterized in that** the MCT is present in an amount of 70% to 80% by weight based on the total weight of the composition.

7. The foodstuff according to any one of Claims 1 through 6, containing a small amount of carbohydrates.

8. The foodstuff according to Claim 7,
**characterized in that** the carbohydrates are present in an amount of 5% to 8% by weight, based on the total weight of the composition, preferably in the form of maltodextrin.

9. The foodstuff according to any one of Claims 1 through 8,
**characterized in that** the L-carnitine is in the form of L-carnitine tartrate which is present in an amount of 2% to 3% by weight and coenzyme Q10 is present in an amount of 0.08% to 1% by weight.

10. The foodstuff according to any one of Claims 1 through 9, additionally containing omega-3 fatty acids.

## Revendications

1. Aliment diététique pour la destruction des graisses, contenant en tant que composant majoritaire du MCT (Medium-Chaînes Triglycérides) et, en tant qu'autre composant, de la L-Carnitine et du coenzyme Q10.

2. Aliment selon la revendication 1, contenant, en plus, du molybdène et du manganèse sous forme de sels.

3. Aliment selon la revendication 2, **caractérisé en ce que** le sel de molybdène est contenu sous la forme de levure de molybdène.

4. Aliment selon la revendication 2 ou 3, **caractérisé en ce que** le sel de molybdène est du carbonate de manganèse(II).

5. Aliment selon la revendication 3 ou 4, **caractérisé en ce qu'**il contient de 0,15 à 2 % en poids de levure de molybdène, avec environ 2 0000 mcg Mo/g et de 0,01 à 0,03 % en poids de manganèse(II) carbonate-hydrate.

6. Aliment selon l'une des revendications 1 à 5, **caractérisé en ce que** le MCT est contenu en une proportion de 70 à 80 % en poids, rapportée au poids total de la composition.

7. Aliment selon l'une des revendications 1 à 6, contenant une petite proportion d'hydrate de carbone.

8. Aliment selon la revendication 7, **caractérisé en ce que** les hydrates de carbone sont contenus en une proportion de 5 à 8 % en poids en se référant au poids global de la composition, de préférence , sous la forme de maltodextrine.

9. Aliment diététique selon l'une des revendications 1 à 8, **caractérisé en ce que** la L-Carnitine se présente sous forme de L-Carnitine-tartrate, contenu en une proportion de 2 à 3 % en poids, et le coenzyme Q10 est contenu en une proportion de 0,08 à 1 % en poids.

10. Aliment selon l'une des revendications 1 à 9, contenant en plus des acides gras Oméga3.
